(19) Europäisches Patentamt
European Patent Office
Office européen des brevets

(11) **EP 4 191 900 A1**

(12) **EUROPEAN PATENT APPLICATION**

(43) Date of publication:
**07.06.2023 Bulletin 2023/23**

(21) Application number: **21212517.3**

(22) Date of filing: **06.12.2021**

(51) International Patent Classification (IPC):
***H04B 10/61*** *(2013.01)*

(52) Cooperative Patent Classification (CPC):
**H04B 10/616**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(71) Applicant: **Nokia Solutions and Networks Oy 02610 Espoo (FI)**

(72) Inventor: **LE, Thai Son Bedminster, NJ, 07921 (US)**

(74) Representative: **DREISS Patentanwälte PartG mbB Postfach 10 37 62 70032 Stuttgart (DE)**

(54) **OPTICAL COHERENT RECEIVER WITH AC-COUPLED SINGLE-ENDED PHOTODETECTORS**

(57)    An optical coherent receiver for an fiber-optic communication system includes an optical mixer configured to mix data-modulated optical signal and an optical local oscillator signal, and to provide two mixed optical signals to two single-ended photo detector (SEPD) circuits. Each of the SEPD signal circuits is AC-coupled to a digital signal processor (DSP). The DSP is configured to generate estimates of the average powers of the data-modulated optical signals and the OLO signal. The DSP may be further configured to control the OLO to signal power ratio at the optical mixer input based on a ratio of the average power estimates. The DSP may be further configured to generate estimates of the in-phase and quadrature signal components from the AC-coupled SEPD signals using the DSP-generated average power estimates.

FIG. 1

EP 4 191 900 A1

## Description

### TECHNICAL FIELD

The present invention generally relates to optical communication systems, and more particularly relates to high-speed optical coherent receivers for quadrature modulated signals.

### BACKGROUND

The symbol rates (baud rates) of optical communication systems, such as but not exclusively coherent optical communication systems, have been increasing over the last two decades. Increasing the baud rate is an effective technique for reducing the transportation cost per bit. Coherent optical transceivers that use quadrature modulation formats can operate at a baud rate of in excess of 100 gigabaud (Gbd), e.g. up to 200 Gbd and beyond. However, transmission quality at such high baud rates, may suffer from bandwidth limitations of opto-electronic components.

### SUMMARY

Conventional balanced photodetectors of coherent optical detectors may not sufficiently high common mode rejection ratio (CMMR) at high baud rates, e.g., at baud rates of 100 Gigabaud (Gbd) and higher. Herein, various embodiments provide for coherent optical receivers configured to function better based on single-ended photodetectors, i.e., typically single photodiodes, and AC coupling to electrical outputs therefrom, rather than balanced pairs of photodiodes with differential outputs or single-ended photodetectors with DC coupled electrical outputs.

An aspect of the present disclosure relates to an apparatus comprising: a coherent optical receiver comprising at least one optical mixer, two single-ended photodetection circuits, two analog-to-digital converters, a digital signal processor (DSP), and an optical local oscillator (OLO). The at least one optical mixer is configured to receive an OLO signal from the OLO and a data-modulated optical signal and to generate first and second light mixtures by interfering parts of said data-modulated optical signal and said OLO signal with corresponding first and second relative phases. Each single-ended photodetection circuit is connected to generate a single-ended electrical measure of a corresponding one of the light mixtures responsive to receipt thereof and to output an electrical signal formed by removing a DC component of said electrical measure. Each analog-to-digital converter is configured to convert a corresponding one of the output electrical signals into a digital signal. The DSP is configured to determine values indicative of a time-averaged power of the data-modulated optical signal and of the OLO signal from the digital signals.

In some implementations, the DSP may be configured to recover data streams carried by two different phase components of the data-modulated optical signal.

In some implementations, the DSP may be configured to use an iterative phase recovery algorithm to estimate DC shifted versions of the two different phase components of the data-modulated optical signal.

In some implementations, including any one of the above, the DSP may configured to estimate the values based on an approximation of a distribution of a sum of squares of the two different phase components of the data-modulated optical signal by a chi-squared distribution.

In some implementations, including any one of the above, the DSP may be configured to estimate the values based on an approximation that a time-average of a square of a sum of powers of the two different phase components of the data-modulated optical signal over a square of a time-averaged power of said data-modulated optical signal is about 2.

In some implementations, including any one of the above, the at least one optical mixer may comprise a 90° optical hybrid.

In some implementations, including any one of the above, the at least one optical mixer may comprise two $2 \times 1$ optical combiners.

In some implementations, including any one of the above, each single-ended photodetection circuit may include a photodiode connected in a single-ended configuration to produce an output signal measuring an optical power of light received thereby.

Some implementations, including any one of the above, may comprise a variable optical attenuator (VOA) connected to adjust an optical power of one of the data-modulated optical signal and the OLO signal. The coherent optical receiver mat be configured to operate the VOA based on feedback from the DSP.

In some implementations, including any one of the above that include recovering two different phase components of the data modulated optical signal, the two different phase components may have a relative phase of about 90 degrees.

In some implementations, including any one of the above, the coherent optical receiver may be configured to adjust a ratio of an optical power of the data-modulated optical signal over an optical power the OLO signal based on the determined values.

Some implementations, including any one of the above, may comprise a polarization beam splitter (PBS) connected to transmit one polarization component of a received data-carrying optical signal to a first opto-electric converter and to direct a second polarization component of the received data-carrying optical signal to a second opto-electric converter; the first opto-electric convertor may include the at least one optical mixer, the two single-ended photodetection circuits, and the two analog-to-digital converters; the second opto-electric convertor may include another optical mixer, two other single-ended photodetection circuits connected to outputs of the another optical mixer, and two other analog-to-digital converters connected to outputs of the other single-ended photodetection circuits.

An aspect of the present disclosure provides a method comprising: mixing a data-modulated optical signal and an optical local-oscillator (OLO) signal to generate first and second light mixtures by interfering parts of said data-modulated optical signal and said OLO signal with corresponding first and second relative phases; for each one of the light mixtures, forming digital measurements by digitizing an electrical signal, the electrical signal being produced by a photodetection circuit connected for single-ended detection producing an electrical measurement of the one of the light mixtures and removing a DC component of the electrical measurement to generate the electrical signal; and digitally processing the digital measurements to determine values indicative of a time-averaged power of the data-modulated optical signal and a time-averaged power of the OLO signal. The method can be used to operate any one apparatus of the above described.

Some implementations of the method may comprise using an iterative phase recovery algorithm to estimate DC shifted versions of two different phase components of the data-modulated optical signal. Some of the implementations may include estimating the values based on an approximation of a distribution of a sum of squares of the two different phase components of the data-modulated optical signal by a chi-squared distribution. Some of the implementations may include estimating the values based on an approximation that a time-average of a square of a sum of powers of the two different phase components of the data-modulated optical signal over a square of a time-averaged power of said data-modulated optical signal is about 2.

In some implementations of the method, including any of the above, the two different phase components may have a relative phase of about 90 degrees.

## BRIEF DESCRIPTION OF THE DRAWINGS

Embodiments disclosed herein will be described in greater detail with reference to the accompanying drawings which represent preferred embodiments thereof, in which like elements are indicated with like reference numerals, and wherein:

FIG. 1 illustrates a block diagram of a coherent optical receiver with a coherent OE converter using AC-coupled single-ended photodetectors;

FIG. 2 is a flowchart of a method for estimating average power of the received data-modulated optical signal and the OLO signal using AC-coupled single-ended photodetectors (AC SEPD);

FIG. 3 is a schematic block diagram of a circuit for generating estimates of a scaling factor $\gamma$ used in the method of FIG. 2;

FIG. 4 is an example estimated probability density function (PDF) of the normalized energy of the I and Q components, $(I_x^2 + Q_x^2)/P_x$ , for 100 Gbaud 16 QAM signal with RRC pulse-shaping and roll-off of 5% in a back-to-back configuration (0 km) and after 20 km of fiber-optic transmission;

FIG. 5 is a graph illustrating simulated scaling factor $\gamma$ vs. transmission distance for 100 Gbaud signals having different modulation formats;

FIG. 6 illustrates a block diagram of a coherent optical receiver having a local oscillator to signal power ratio (LOSPR) controlled from the receiver electrical back end;

FIG. 7A is a schematic diagram of a first embodiment of a logic circuit for generating digital signals providing estimates of average optical powers of the data-modulated optical signal and the OLO signal;

FIG. 7B is a schematic diagram of a second embodiment of a logic circuit for generating digital signals providing estimates of average optical powers of the data-modulated optical signal and the OLO signal;

EP 4 191 900 A1

FIGs. 8A-8B illustrate example functional block diagrams of digital signal processors (DSPs) of the coherent optical receiver of FIG. 1 according to various embodiments;

FIG. 9 is an example circuit diagram of an iterative phase recovery logic for estimating the I and Q components having a common DC offset, e.g., in the DSPs of FIG.s 8A - 8B;

FIG. 10 is an example circuit diagram of an I,Q estimation logic implementing the iterative phase recovery logic of FIG. 9;

FIG. 11 illustrates a block diagram of a dual-polarization (DP) coherent optical receiver using a pair of the coherent OE converters, e.g, as in FIG. 1;

FIG. 12 is a schematic functional block diagram of a DSP of the DP coherent optical receiver of FIG. 11.

**DETAILED DESCRIPTION**

In the following description, for purposes of explanation and not limitation, specific details are set forth, such as particular circuits, circuit components, techniques, etc. in order to provide a thorough understanding of the present invention. However, it will be apparent to one skilled in the art that the present invention may be practiced in other embodiments that depart from these specific details. In other instances, detailed descriptions of well-known methods, devices, and circuits may be omitted so as not to obscure the description of the present invention. All statements herein reciting principles, aspects, and embodiments of the invention, as well as specific examples thereof, are intended to encompass both structural and functional equivalents thereof. Additionally, it is intended that such equivalents include both currently known equivalents as well as equivalents developed in the future, i.e., any elements developed that perform the same function, regardless of structure.

Note that as used herein, the terms "first", "second" and so forth are not intended to imply sequential ordering, but rather are intended to distinguish one element from another, unless explicitly stated. Similarly, sequential ordering of method steps does not imply a requirement of sequential order of their execution, unless explicitly stated. The term "connected" may encompass direct connections or indirect connections through intermediate elements, unless explicitly stated otherwise. The term "electrically connected" and its derivatives encompasses both DC (direct-current) and AC (alternating current) connections, unless explicitly stated otherwise.

The present disclosure describes coherent optical receivers for high-speed quadrature modulated signals using single-ended photodetectors (SEPDs) AC-coupled to a digital signal processor. Single-ended PDs may be used in coherent optical receivers instead of balanced PDs at high baud rate, when maintaining high CMRR becomes challenging, e.g. due to difficulties of selecting PD pairs that would be well balanced at very high data rates. However, output signals of single-ended PDs in coherent detection schemes include an undesired signal-signal beat interference (SSBI) component. The SSBI component may be in principle removed by digital signal processing if a DC component of the PD signal is known. The DC component of the PD signal may be obtained e.g. using additional optical taps coupled to monitoring PDs, or using DC-coupled PDs requiring an increased ADC range thereby likely reducing an obtainable ADC resolution, or other modification of the receiver architectures. These approaches in general increase the complexity and performance requirements of various receiver components. Embodiments described below use digital signal processing to estimate average optical powers of the data-modulated optical signal and the local oscillator signal using outputs of AC-coupled single-ended PDs, which may allow simplifying the receiver architecture and/or relaxing requirements to ADC resolution. As used herein, the term "single-ended" refers to an electrical configuration in which the photocurrent generated by a single PD, such as e.g. a single photodiode, is sensed and/or measured by a corresponding electrical circuit, e.g., a trans-impedance amplifier (TIA) connected to an analog to digital converter (ADC). The single photodiode so connected has a single optical input, a single electrical output e.g., with respect to a reference or ground, and a reverse-biased p-n junction that converts light received at the optical input into electrical current at the electrical output. Single-ended electrical PD configuration is in contrast to balanced photo detection schemes. A typical balanced photodetector has two optical inputs, one electrical output, e.g., with respect to a ground or reference level, and has two nominally identical constituent photodiodes having separate and distinct p-n junctions. In the balanced detector, the two photodiodes are serially connected across a biasing voltage, and the electrical output is between the two photodiodes to provide a differential measurement of the photo-induced currents across the two p-n junctions. The quality of the differential performance of a balanced photodetector typically depends on the extent to which the two constituent photodiodes are matched to one another.

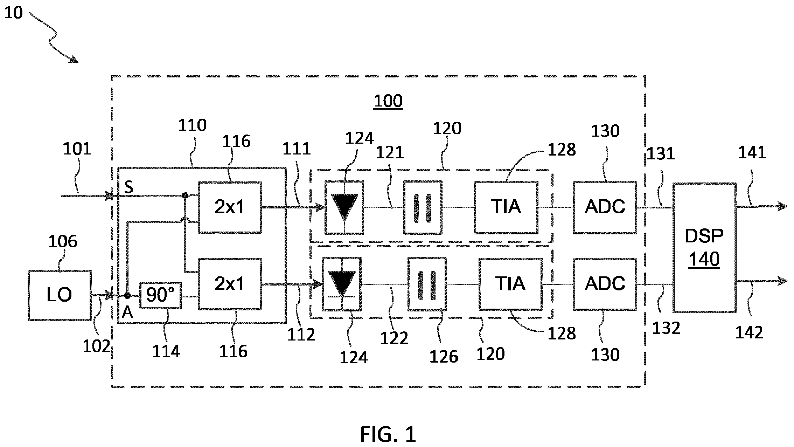

Referring to FIG. 1, an example optical coherent receiver 10 includes a coherent opto-electric (OE) converter (COEC) 100 coupled at its output to a digital signal processor (DSP) 140. COEC 100 includes an optical mixer (OM) 110 having two input ports and two output ports, the output ports connecting to two single-ended photodetector (SEPD)

4

circuits 120. Each SEPD circuit 120 includes a photodetector (PD) 124, e.g. a suitable high-speed photodiode, electrically connected in a single-ended configuration. Electrical outputs of the SEPD circuits 120 are AC-coupled to the DSP 140 via two analog to digital converters (ADC) 130, so as to feed, to the respective ADCs 130, electrical PD signals having their DC components substantially removed.

The COEC 100 is configured to receive a data-modulated optical signal 101, e.g. via a fiber-optic commination link from a remote optical transmitter (not shown). The data-modulated optical signal 101 may be quadrature-modulated (QM) high baud rate signal, e.g. a QPSK or a multi-level QAM signal, that carries an in-phase (I) signal component and a quadrature (Q) signal component of a data signal being transmitted by the remote transmitter. In operation, the data-modulated optical signal 101 is provided into a signal port of the OM 110, labeled "S". The OM 110 is configured to mix the data-modulated optical signal 101 with a reference optical signal 102 from an optical local-oscillator (OLO) 106, the signal 102 also referred to as the OLO signal 102. The OLO 106 may be a laser source, for example a frequency-stabilized narrow-linewidth semiconductor laser configured to generate light at a reference optical frequency $f_r$ approximately equal to an optical carrier frequency $f_c$ of the data-modulated optical signal 101. In at least some embodiments the optical frequency difference $\Delta f = |f_c - f_r|$, which may be referred to as the carrier frequency offset (CFO), may be within the detection bandwidth of the SEPD circuits 120. In some embodiments, the OLO signal 102 can be frequency locked to the optical carrier of optical signal 101, e.g., as known in the art. In such embodiments, receiver COEC 100 can operate as a homodyne optical receiver.

The OM 110 may be a 2×2 90° optical hybrid having two input ports, labeled "S" and "A", for receiving the data-modulated optical signal 101 and the OLO signal 102, respectively, and two output ports for providing two light mixtures 111 and 112, by interfering parts of the data-modulated optical signal 101 and the OLO signal 102 with corresponding first and second relative phases. The two light mixtures 111 and 112, also referred to herein as the first and second mixed optical signals 111 and 112, combine the data-modulated optical signal 101, or respective parts thereof, with phase-offset parts of the OLO signal 102. In an example embodiment, the first and second mixed optical signals 111 and 112 have an approximate 90° or 270° offset in the OLO signal 102 relative to the corresponding part of the data-modulated optical signal 101. As illustrated, the OM 110 may be embodied for example using two 2×1 optical couplers 116 and a 90° optical phase shifter 114. OM 110 may also be embodied using a single multi-mode interference (MMI) coupler having at least two input ports and at least two output ports.

The electrical SEPD circuits 120 may each include a DC blocking circuit 126 electrically connected between respective PD 124 and ADC 130. The DC blocking circuit 126, which may include a capacitor in the path of the electrical SEPD signal to the ADC, is configured to block the DC component of the respective electrical SEPD signal, 121 or 122, from reaching the ADC 130, and to allow the AC component thereof to be received by the ADC 130. Typically, the electrical SEPD circuits 120 may each further include an amplifier 128, e.g. a trans-impedance amplifier (TIA), at the output thereof. Alternatively, the ADCs 130 may be configured to respond to electrical PD currents, or AC components thereof. The ADC 130 digitize the AC components of the electrical SEPD signals received from the electrical SEPD circuits 120, i.e. sample them at a suitable sampling rate, to produce first and second digital signals 131 and 132. The first and second digital signals 131 and 132 provide streams of AC-coupled SEPD (AC SEPD) signal samples, which will be denoted $R_1$ and $R_2$, respectively, to the DSP 140. The first and second digital signals 131 and 132 may also be referred to as AC SEPD digital signals. The DSP 140 is configured to process the first and second digital signals 131 and 132 to determine values indicative of a time-averaged power of the data-modulated optical signal and of the OLO signal, and to generate digital signals 141 and 142 carrying stream of the determined values, e.g. one value per symbol interval. The determined values may provide estimates of average optical power for the data-modulated optical signal 101, and of the OLO signal 102, respectively. The digital signals 141 and 142 may also be referred to as third and fourth digital signals. In various embodiments, the digital signals 141 and 142 may be used to control the LO to signal power ratio (LOSPR) and/or to recover, from the first and second digital signals 131 and 132, the data carried by two different phase components of the data modulated optical signal 101, e.g. by the I ("in-phase") and Q ("quadrature") components thereof.

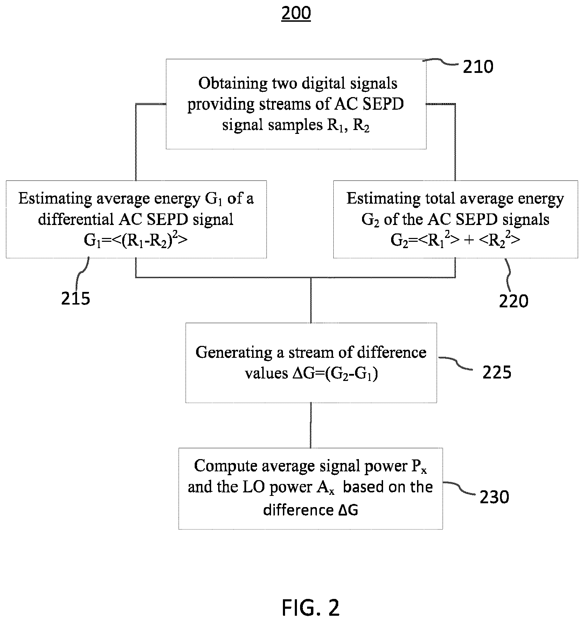

In the following, simplified mathematical models are presented to better explain signal processing that may be implemented in DSP 140 according to an embodiment. However, it will be appreciated that the mathematical models presented herein are approximate and for the purpose of illustration and/or explanation only. An example of such processing is described with reference to FIG. 2, providing a flowchart of an example process that the DSP 140 may implement according to an embodiment.

The electrical field $E_x$ of the data-modulated optical signal 101 may be described as a complex amplitude:

$$E_x = I_x + jQ_x, \quad (1)$$

where $I_x$ is the in-phase component of $E_x$, and $Q_x$ is the quadrature component of $E_x$, where the subscript "x" denotes e.g. a polarization state of the data-modulated optical signal 101. Furthermore, the amplitude of the electric field $E_{LO}$ of the OLO signal 102 can be represented as a real value,

$$E_{LO} = A_x, \qquad (2)$$

which does not vary rapidly in time. This representation implies that the OLO signal 102 has a negligibly low level of phase and amplitude noise, and that $E_x$, which varies in time, $E_x = E_x(t)$, accounts for a possible LO-carrier frequency offset (CFO) $\Delta f$.

Then, the transfer function $H$ of the 90-degree optical mixer 110 can be approximated by the following $2 \times 2$ matrix:

$$H = \frac{1}{2}\begin{bmatrix} 1 & 1 \\ 1 & j \end{bmatrix}, \qquad (3)$$

For simplicity, the common factor 0.5 in equation (3) is omitted in the analysis that follows. Also, eq. (3) is for a relative mixing phase of 90° and no attenuation between the inputs and the 2 outputs, but the person of ordinary skill would understand, from the present disclosure how to suitably modify eq. (3) for other conditions. The electrical fields $S_1$ and $S_2$ of the mixed optical signals 111 and 112 at the outputs of the OM 110 can be approximated as follows:

$$S_1 = E_x + A_x$$
$$S_2 = E_x + jA_x \qquad (4)$$

Values of the electrical SEPD signals 121, 122 in a given time slot, denoted as $P_1$ and $P_2$ respectively, which are proportional to received optical intensities, can then be approximated as follows:

$$P_1 = |E_x|^2 + 2A_x I_x + A_x^2$$
$$P_2 = |E_x|^2 + 2A_x Q_x + A_x^2 \qquad (5)$$

Here, the term $|E_x|^2$ represents unwanted signal-to-signal beat interference (SSBI), which has DC and AC components, and the term $A_x^2$ represents the DC offset caused by the OLO signal 102. The digital signals 131 and 132, denoted $R_1$ and $R_2$, represent AC-coupled versions of the electrical SEPD signals 121, 122 of eq. (5); they can be approximated by the following equations (6):

$$R_1 = |E_x|^2 + 2A_x I_x - P_x$$
$$R_2 = |E_x|^2 + 2A_x Q_x - P_x \qquad (6)$$

where $P_x$ is the time-average optical power of the data-modulated optical signal 101, and is approximately equal to the mean value of the SSBI term $|E_x|^2$, i.e. $P_x = <|E_x|^2>$, where $<\cdot>$ denotes averaging, e.g. over a sufficiently long time window in the analog domain. The average LO signal power is represented by $A_x^2$. Equations (6) are obtained assuming that $<I> = <Q> = <I\cdot Q> = 0$, which typically holds for QPSK and typical QAM signals carrying approximately random or pseudo-random data streams. Also, equations (5) and (6) are for an example embodiment with a TIA gain $g = 1$ and equal responsivities of the SEPDs, but a person of ordinary skill in the art would understand, from the present disclosure, how to suitably modify eqs. (5) and (6) for other conditions.

Referring now to FIG. 2, in one embodiment receiver 10 may implement a method 200, in which the DSP 140 uses an example numerical algorithm to estimate time-averages of the received optical signal and OLO powers, $P_x$ and $A_x^2$, from the digitized AC components $R_1$ and $R_2$ of the output SEPD signals 121 and 122. In the flowchart of FIG. 2, each block, which may be referred to as "step", represents an operation, or a sequence of operations, performed by the COEC 100 and the DSP 140. Operations in blocks 215-230 may be performed by the DSP 140 for a given time slot, which may correspond to one symbol interval of the received data signal, and may include time averaging e.g. over a sliding window extending across multiple symbol intervals.

In the illustrated embodiment, method 200 starts at 210 with the COEC 100 operating to produce two digital data signals, e.g. 131 and 132, providing streams of AC SEPD signal samples $R_1$ and $R_2$. At 215, the DSP 140 estimates an average energy, or power, $G_1$ of a differential AC SEPD signal $\Delta R = (R_1 - R_2)$, e.g. by computing an average of the square of the difference between the first and second digital signals 131, 132 for the same time slot:

$$G_1 = \mathbf{E}\{(R_1 - R_2)^2\} \ . \qquad (7)$$

Here, $\mathbf{E}\{\cdot\}$ denotes the averaging operation that the DSP 140 may perform on some function of $R_1$, $R_2$ over a sufficiently long sequence of time slots. In an example embodiments, such averaging may be computed using a sliding window, e.g. of length $(2K+1)$; here $K$ is a relatively large fixed positive integer which value can be selected, e.g., for optimal performance. For example, for a $k$-th time slot, the average $\mathbf{E}\{(R_1 - R_2)^2\}$ can be computed e.g. by averaging the values of $(R_1 - R_2)^2$ corresponding to the time slots $(k-K)$, $(k-K+1)$, $(k-K+2)$, ... , $(k+K)$. By way of example, $K$ *may* be at least 5, or at least 10, or at least 20, or more.

At step 220, the DSP 140 estimates a total average energy of the AC SEPD signals 131, 132 for a given averaging time, $G_2$, e.g. by computing an average of the sum of the squares of the first and second digital signals:

$$G_2 = \mathbf{E}\{R_1^2\} + \mathbf{E}\{R_2^2\} \ , \qquad (8)$$

where the averages $\mathbf{E}\{R_1^2\}$ and $\mathbf{E}\{R_2^2\}$ may be computed e.g. using a sliding window as described above.

At step 225, the DSP 140 computes the difference $\Delta G$ of the two averages or energies $G_1$ and $G_2$:

$$\Delta G = G_2 - G_1 \qquad (9)$$

At step 230, the DSP 140 computes, based on the difference $\Delta G$, approximate values of the average signal power $P_x$ and the LO power $A_x$ for the given, e.g. current, averaging time. The corresponding computations may be described by the following equations (10) and (11):

$$P_x = \sqrt{\frac{G_2 - G_1}{2G_3 - 2}} = \sqrt{\gamma(G_2 - G_1)}, \qquad (10)$$

$$A_x^2 = \frac{G_1}{4\sqrt{\gamma(G_2 - G_1)}} \qquad (11)$$

Here parameter $\gamma$ is defined by equation (12):

$$\gamma = 1/(2G_3 - 2) \qquad (12)$$

where parameter $G_3$ is defined by equation (13)

$$G_3 = \langle (I_x^2 + Q_x^2)^2 \rangle / P_x^2 \qquad (13)$$

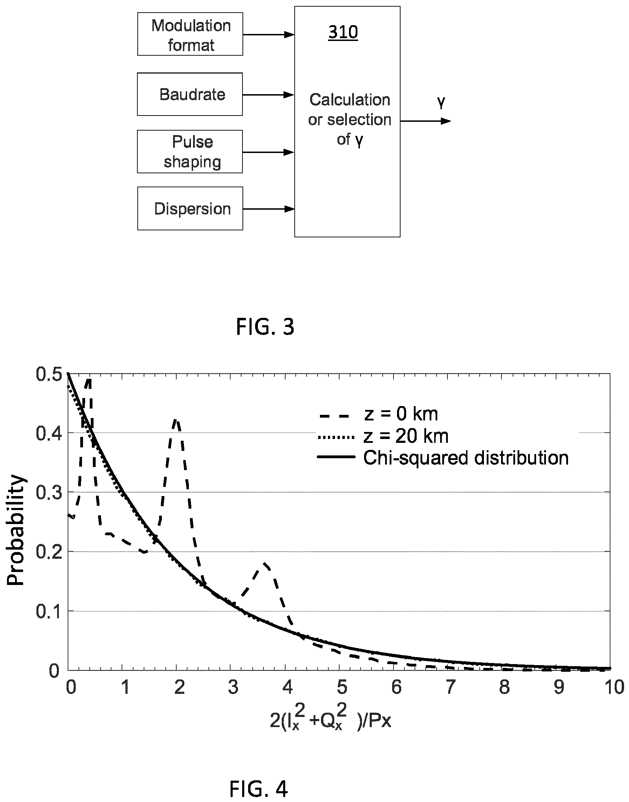

Referring to FIG. 3, $G_3$ may be computed for a particular modulation format based on known modulation parameters, such as the baud rate and the pulse shaping function used at the transmitter to generate the I and Q signal components, and the dispersion that the data-modulated optical signal 101 accumulated in a fiber-optic link while propagating from the remote optical transmitter to the optical receiver 10. Accordingly, in some embodiments the DSP 140 may be configured to store signal transmission information indicative of the signal modulation format, the signal baud rate, the pulse shaping function used at the remote optical transmitter, and dispersion characteristics of the fiber-optic link connecting the optical receiver 10 to the remote optical transmitter generating the signal, and may include a functional module 310 that computes parameter $\gamma$ based on the stored information signal transmission, or contains a database, e.g. a look-up table (LUT) storing information indicative of values of $\gamma$ for a plurality of optical transmitter modulation parameters and optical fiber link characteristics.

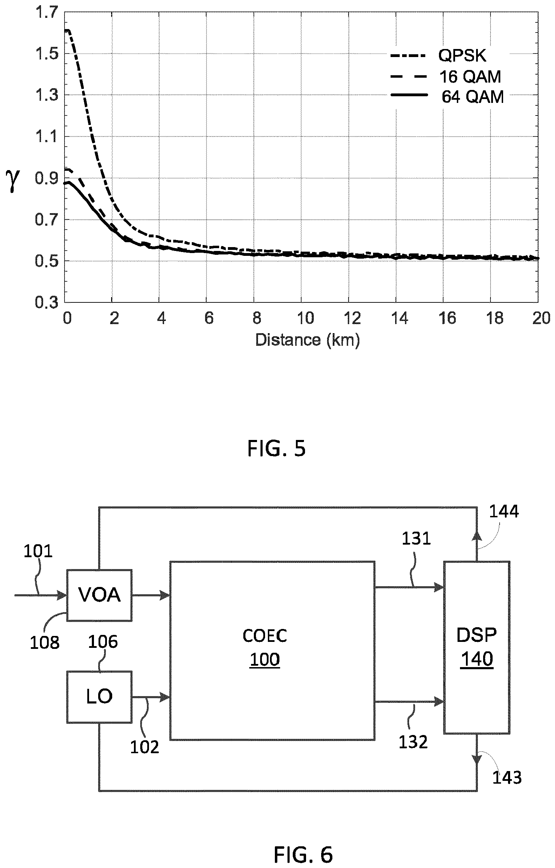

In other embodiments, the DSP 140 may be configured to estimate the average signal power $P_x$ and the LO power $A_x$ based on equations (10) and (11), or similar, using a pre-determined fixed value for parameter $\gamma$. For high baud rate transmissions, due to the dispersion in the fiber-optic link, both the $I_x$ and $Q_x$ components of the data-modulated optical signal 101 at the receiver 10 can be approximated by random values having a Gaussian distribution. As a result, the sum of their squares $I_x^2 + Q_x^2$ may be approximately described by a known chi-squared distribution. By way of example, FIG. 4 shows the probability density function for $2(I_x^2 + Q_x^2)/P_x$ for a 16 QAM signal with root-raised-cosine (RRC) pulse shaping and roll-off of 0.05. The solid curve shows the chi-squared distribution. The dashed curve relates to the receiver 10 connected back-to-back (B2B) to the transmitter, i.e. in the absence of link dispersion. The dotted line is for the data-modulated optical signal after transmission over a 20 km long fiber-optic link. One can see that already after 20 kilometers (km) of transmission over a typical fiber-optic link, the probability distribution for $2(I_x^2 + Q_x^2)/P_x$ converges to the chi-squared distribution, with an average value of its square equal to 2, which corresponds to $\gamma = 0.5$. This is further illustrated in FIG. 5, which shows the value of $\gamma$ in dependence on the propagation distance in a typical fiber-optic link for a 100 Gbaud signal transmission for the QPSK, 16QAM, and 64 QAM formats. It thus appears that $\gamma$ converges to a fixed value of 0.5 over the propagation distance of 10 km regardless of the modulation format, at least for two typical quadrature modulation formats.

Accordingly, in some embodiments, e.g. when data-modulated optical signal 101 reaches the receiver 10 after propagating through a typical fiber optic link that is at least 10 km long, the DSP 140 may be configured to estimate the average signal power $P_x$ and the LO power $A_x^2$ using e.g. equations (10) and (11) with $\gamma$ equal to about 0.5, corresponding to G3 equal to about 2. Here, about means to include deviations within +\- 10% of the corresponding value. In some alternate embodiments, the DSP 140 may store a look-up table (LUT) comprising values of parameter $\gamma$ for a plurality of modulation formats and a plurality of transmission distances.

Referring to FIG. 6, in some embodiments the optical receiver may be configured to control the optical power of at least one of the data-modulated optical signal 101 and the OLO signal 102 at the inputs of the COEC 100 using one or more control signals, e.g. 143 and/or 144, generated by the DSP 140. Controlling the input data-modulated optical signal and/or OLO power is typically desired e.g. to maintain the LO to signal power ratio (LOSPR) above a certain pre-defined threshold based on the estimates to facilitate reliable signal decoding at the receiver. The DSP 140 may be configured to estimate the LOSPR by computing the ratio $A_x^2/P_x$ of the estimates for LO power $A_x^2$ and the average optical signal power $P_x$, and to control the optical power of at least one of the data-modulated optical signal 101 and the OLO signal 102 so that the ratio $A_x^2/P_x$ stays above a pre-defined threshold. In some embodiments, the DSP 140 may be operatively connected to the OLO source 106 and may be configured to generate a first control signal 143 to control the optical power of the OLO signal 102, e.g. based on the ratio $A_x^2/P_x$. FIG. 6 schematically illustrates an embodiment of the receiver which includes a variable optical attenuator (VOA) 108 upstream of the signal port of the COEC 100. The VOA 108 is configured to attenuate the received data-modulated optical signal 101 responsive to a second control signal 144 from the DSP 140, e.g. to provide an additional, or an alternative, control channel for controlling the LOSPR based on the estimates of the average signal power $P_x$ and the LO power $A_x^2$.

Advantageously, the ability of DSP 140 to estimate at least the relative values of the average optical signal power and the OLO power at the input to the OM 110 may make unnecessary the presence of optical taps and monitoring PDs that are typically provided in conventional coherent optical receivers upstream of the optical mixer to directly monitor the optical signal power and the OLO power at the OM inputs. Accordingly, such monitoring PDs may be absent in some embodiments of the COEC 100 and the coherent optical receiver 10.

Referring back to FIG. 1, equations (5) and (6) are based on a unit amplifier gain in the SEPD circuits 120. For such a system, equations (10) and (11) provide relative values for the estimates of the average signal and LO powers $P_x$ and $A_x^2$, which is adequate for estimating the LOSPR. In light of the present disclosure, the person of ordinary skill would understand how to modify the various equations for other values of the gain. In some embodiments, the DSP 140 may store scaling coefficients for one or both of the SEPD circuits 120, which can be used to estimate absolute power levels for the data-modulated optical signal 101 and the OLO signal 102 based on the $P_x$ and $A_x^2$ estimates. The scaling coefficients may account, e.g. for the TIA gain and the EO-conversion coefficients of the PDs 124.

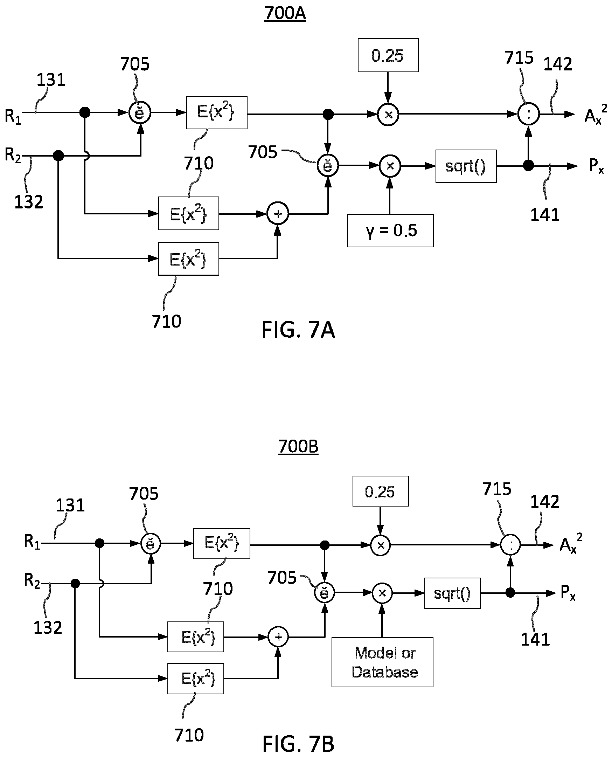

FIGs. 7A and 7B illustrate example logic circuits 700A and 700B, respectively, that the DSP 140 may implement to generate digital signals 141 and 142 providing estimates of the optical signal power $P_x$ and the LO power $A_x^2$, respectively, based on the digital signals 131 and 132 providing the AC SEPD signal samples $R_1$ and $R_2$. In the illustrated embodiments, logic circuits 700A and 700B implement digital signal processing based on equations (10) and (11) and following method 200 described above. Logic circuits 700A and 700B are similar, except that logic circuit 700A uses a constant value of 0.5 for the scaling factor $\gamma$, while logic circuit 700B uses a signal simulation module or a database, e.g.

a LUT, to provide a value of the scaling factor $\gamma$ for a particular transmission environment as described above. Each logic circuit 700A and 700B includes three averaging modules 710, each of which configured to process a stream of input signal samples "x" to compute average values of squares thereof, $\mathbf{E}\{x^2\}$, for example using a sliding window algorithm as described above, two subtracting logic units 705, and a divider unit 715, among other elements which functions are indicated in FIGs. 7A and 7B.

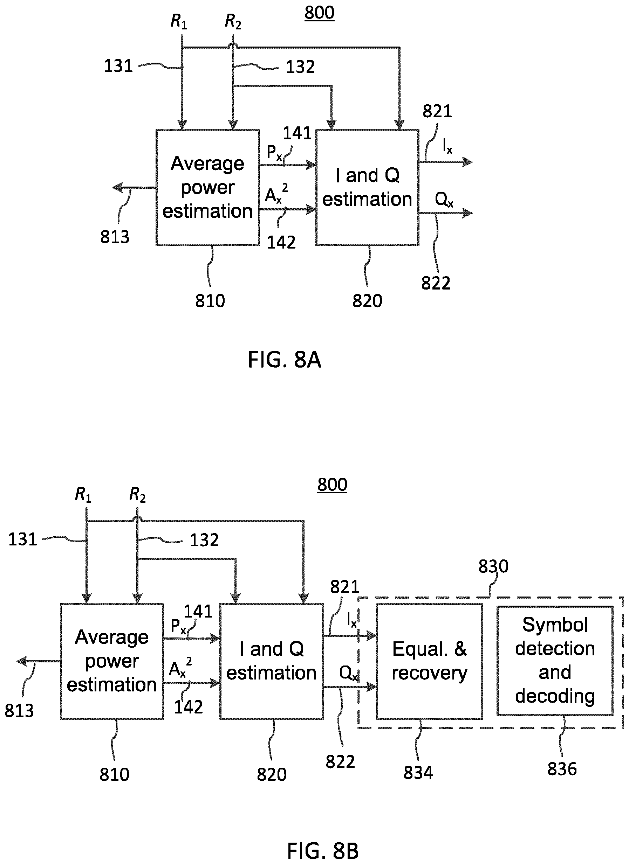

FIG. 8A illustrates a schematic block diagram of part of a DSP 800, which may be an embodiment of DSP 140. The DSP 800 is further configured to use the digital signals 141 ($P_x$) and 142 ($A_x^2$) to recover the I and Q signal components for consecutive symbol intervals from the digital signals 131 (Ri) and 132 ($R_2$), and to provide streams of the I and Q estimates as digital signals 821 and 822. In the embodiment of FIG. 8A, DSP 800 includes a power estimation module 810, and an I&Q estimation module 820, each receiving digital signals 131 and 132 carrying streams of samples of the AC SEPD signals, $R_1$ and $R_2$. The power estimation module 810 provides to the I&Q estimation module the digital signals 141 and 142, which carry streams of the $P_x$ and $A_x^2$ values. The power estimation module 810 may operate as described above with reference to FIGs. 2, 7A, and 7B. The I&Q estimation module 820 of the DSP 800 is configured to generate, for each symbol signaling interval, estimates of the in-phase component, I, and the quadrature component, Q, of the data-modulated optical signal 101. Streams of the I and Q estimates are carried by digital signals 821 and 822, respectively.

Referring to FIG. 8B, in some embodiments, the DSP 800 may further include an I&Q signal processing module 830 configured to recover, from the digital signals 821 (I) and 822 (Q), the data encoded onto the data-modulated optical signal 101 at the remote optical transmitter. Module 830 may in turn include an equalization and phase recovery module 834 operationally followed by a symbol detection and decoding module 836; these modules may operate e.g. using known in the art techniques to perform conventional signal equalization, phase and/or carrier recovery, symbol detection and decoding, and will not be described here in detail.

In some embodiments, the I&Q estimation module 820 may be configured to use an iterative process to generate, based on quantities carried by the digital signals 131, 132, 141, and 142, estimates for DC-offset I and Q components, e.g., the I and Q components having an approximately common DC offset caused by mixing with the OLO signal, and then subtracting the common DC offset to generate the I and Q estimates. In some embodiments, the iterative process may include iterative phase recovery.

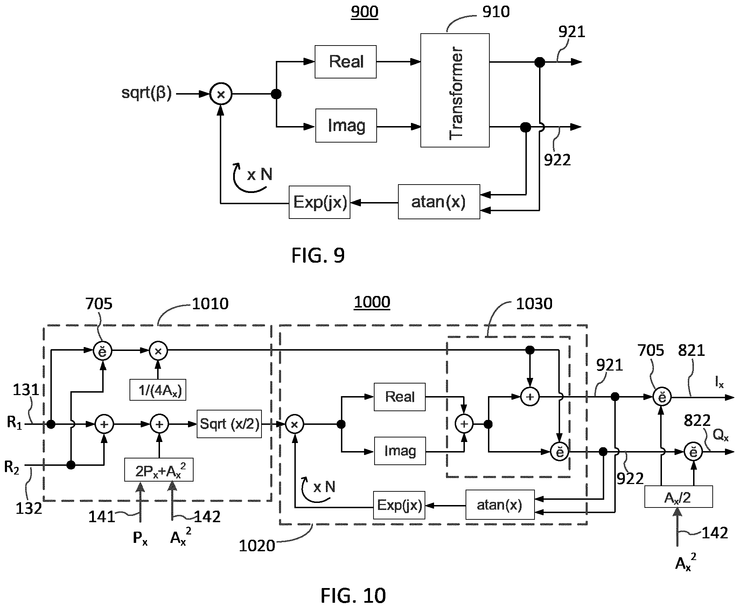

An example iterative process to generate the DC-shifted I and Q estimates will now be described with reference to equation (5) and FIGs. 9 and 10. The example iterative process may be understood by noting that a DC-shifted version,

$I_1$, of the in-phase component $I_x$, $I_1 = I_x + \frac{A_x}{2}$, and a DC-shifted version, $Q_1$, of the quadrature component $Q_x$,

$Q_1 = Q_x + \frac{A_x}{2}$, satisfy the following equations (14), as may be verified using equations (5):

$$I_1{}^2 + Q_1{}^2 = \beta^2$$

$$\quad (14)$$

$$I_1 - Q_1 = \theta$$

where quantities $\beta$ and $\theta$ are functions of quantities $R_1$, $R_2$, $P_x$, and $A_x^2$ provided by the digital signals 131, 132, 141, and 142:

$$\beta = \sqrt{\frac{R_1 + R_2 + A_x^2 + 2P_x}{2}}$$

$$\quad (15)$$

$$\theta = \frac{R_1 - R_2}{2A_x}$$

Accordingly, the I and Q signal components for a given symbol interval may be estimated by finding the DC-shifted versions thereof, i.e. $I_1$ and $Q_1$, that satisfy Equations (14), e.g. using an iterative process, and then subtracting $A_x/2$ from each to remove the OLO-related DC offset.

One approach to solving equations (14) is by estimating a phase $\phi$,

$$\phi = \arctan(Q_1/I_1), \quad (16)$$

of a complex DC-shifted signal $W = I_1 + i \cdot Q_1 = \beta \cdot e^{i\phi}$ having an amplitude $\beta$, with the phase $\phi$ defined by a ratio of the imaginary part of W over real part of $W$. Here, the difference between $I_1$ and $Q_1$ is defined as $\theta$. The real-valued amplitude $\beta$ may also be referred to as the amplitude of the DC-shifted I,Q signal. An example logic circuit for iterative recovery of the phase $\phi$ is illustrated in FIG. 9. In operation logic 900 receives a stream of values for the amplitude $\beta$, e.g. one per symbol interval, and outputs digital signals 921 and 922 providing streams of $I_1$ and $Q_1$ values, respectively. Logic 900 includes a transformer unit 910 which, at $n$-th iteration, receives the (n-1)th estimates of $I_1$ and $Q_1$ for a current signaling interval, denoted as I(n-1) and Q(n-1), and transforms them into n-th estimates that satisfy the second of equations (14), e.g. according to equations (16):

$$I_1(n-1) \rightarrow I_1(n) = \frac{I_1(n)+Q_1(n)}{2} + \frac{\theta}{2}$$
$$Q_1(n-1) \rightarrow Q_1(n) = \frac{I_1(n)+Q_1(n)}{2} - \frac{\theta}{2} \qquad (17)$$

The (n)th estimates I(n) and Q(n) are then used at unit to compute the (n+1)th estimate $\phi$(n+1) of the phase, e.g. in accordance with equation (16), and the (n+1)th estimate of the vector W, W(n+1), e.g. by multiplying the phase factor $\exp(i\phi(n+1))$ by $\sqrt{(\beta)}$. The (n+1)th iteration then ends with computing (n+1)th estimates I(n+1) and Q(n+1) as the real and imaginary parts of W(n+1), respectively. After $N$ iterations, where $N$ is a fixed positive integer, the process is stopped, and the $N$-th estimates $I(N)$ and $Q(N)$ are provided as the output DC-shifted estimates $I_1$ and $Q_1$. The number of iterations $N$ is an algorithm parameter that can be selected, e.g., for optimal performance. Transformer unit 910 may start the iterative process using e.g. I(0) = $\sqrt{(\beta)}$ , Q(0) = 0 as its inputs. The inventors believe that for most practical systems, $N$ between 2 and 10 may provide sufficiently accurate estimates of the in-phase and quadrature components of the transmitted data symbol.

FIG. 10 illustrates an example logic circuit 1000 for generating the digital signals 141 and 142, which provide estimates of the I and Q signal components, based on the digital signals 131, 132, 141, and 142. It includes an amplitude computing logic 1010 for computing the amplitude $\beta$ based on the digital signals 131, 132, 141, and 142, e.g. in accordance with equation (15), followed by a phase-recovery logic 1020. The phase recovery logic 1020 is an embodiment of logic 900 of FIG. 9 with a logic circuit 1030 implementing the transformer 910. Digital signals 141 and 142 are obtained from the digital signals 921 and 922 by subtracting the DC offset Ax/2 using subtracting logic 705.

Embodiments may be envisioned that use alternative techniques of SSBI cancellation to generate the I and Q estimates from SEPD signals and average powers of the optical data and LO signals, including direct field reconstruction (DFR), clipped iterative SSBI mitigation (CIC), and gradual descent (GD), examples of which are described e.g. in the article "Single-ended Coherent Receiver", by S. T. Le, V. Aref and J. Cho, "Single-ended Coherent Receiver," in Journal of Lightwave Technology, doi: 10.1109/JLT.2021.3127347, https://arxiv.org/ftp/arxiv/papers/2109/2109.09683.pdf, the article[s] of this paragraph being incorporated by reference herein in its[their] entirety. However, the inventor believes that the iterative phase reconstruction technique for LO-shifted I and Q signal components, which is described above with reference to FIGs. 9 and 10 and equations (14)-(17), may often have some advantages over alternative techniques listed above, such as, faster convergence with smaller reconstruction error and/or may be more robust against the optical receiver's bandwidth limitations.

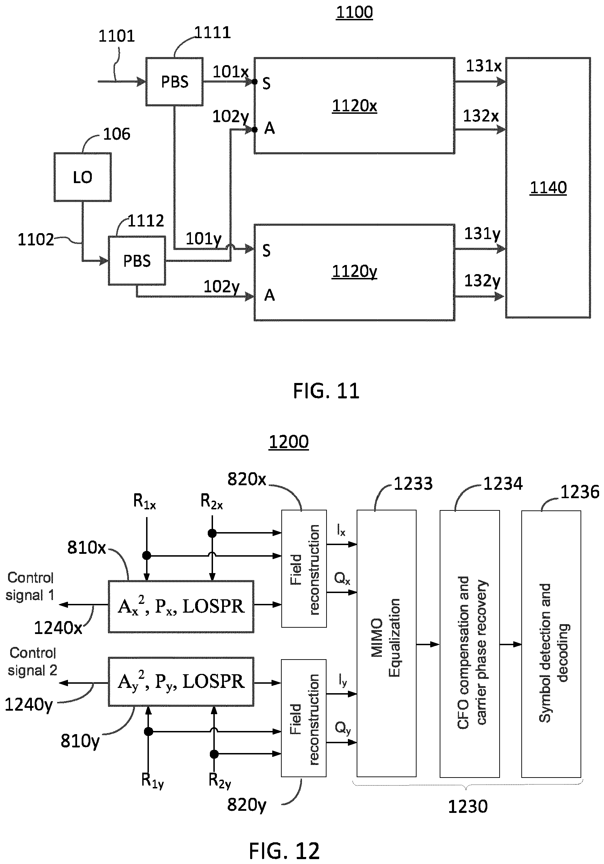

FIG. 11 illustrates a block diagram of a coherent optical receiver 1100 according to an embodiment. Receiver 1100 is a dual-polarization (DP) receiver and is capable of supporting polarization division multiplexing (PDM) transmission. Receiver 1100 includes two COECs, COEC 1120x and COEC 1120y, for separately processing two polarizations of a received data-modulated optical signal 1101. The COEC 1120x and COEC 1120y may be substantially two similar instances of a same COEC, and may be generally referred to as COEC 1120. COEC 1120 may be an embodiment of the COEC 100, as described above. Receiver 1100 further includes two polarization beam splitters (PBS), PBS 1111 and PBS 1112. The PBS 1111 and 1112 are configured to split a received data-modulated optical signal 1101 and an OLO signal 1102, respectively, into two orthogonally polarized optical signals with the respective polarizations referred to as the X-polarization and the Y-polarization. The X-polarized components of the received data-modulated optical signal 1101 and of the OLO signal 1102, 101x and 102x respectively, are provided to the signal ("S") and LO ("A") ports of the first COEC 1120x. The Y polarization components of the received data-modulated optical signal 1101 and of the OLO signal 1102, 101y and 102y respectively, are provided to the signal ("S") and LO ("A") ports of the second COEC 1120y. The first instance of the COEC 1120, COEC 1120x, is operable to generate measured estimates of the optical signal carried by the X-polarization of the received data-modulated optical signal 1101. The second instance of the COEC 1120, COEC 1120y, is operable to generate measured estimates of the optical signal carried by the X-polarization of the received optical data signal 1101. Both instances of the COEC 1120 may operate as described above with reference to COEC 100 and FIGs. 1-10.

The received optical data signal 1101 may be a PDM optical signal. In an example embodiment, output digital signals 131x and 132x of the COEC **1120x** provide streams of the EC SEPD signal samples for the data-modulated optical signal **101x,** while output digital signals 131y and 132y of the COEC **1120y** provide streams of the EC SEPD signal samples for the data-modulated optical signal **101y**. These digital signals may then be provided to a DSP module 1140, wherein they may be first processed as described above to generates estimates for the average optical signal and OLO powers and estimates of the I and Q signal components separately in the X-polarization channel and the Y-polarization channel.

FIG. 12 schematically illustrates a functional block diagram of a DSP 1200, which may be an embodiment of the DSP 1140 of FIG. 11. The DSP 120 includes two power estimation modules, 810x and 810y, that connect to field estimation modules 820x and 820y, respectively. The power estimation modules, 810x and 810y, are configured for generating estimates of the average signal and LO powers in the x-polarization channel, $P_x$ and $A_x^2$, and the y-polarization channel, $P_y$ and $A_y^2$, respectively. The modules 810x and 810y may each be an embodiment of module 820 of FIG. 8, and operate as described above, e.g. with reference to FIGs. 2, 7A, and 7B. The field estimation modules 820x and 820y are configured to generates the I and Q estimates in the X- and Y-polarization channels, respectively, and may each be embodiments of the I&Q estimation module 820 of FIG. 8. The I and Q estimates in the two polarization channels may then be passed to a signal processing module 1230 for further processing as known in the art, such as e.g. multi-input, multi-output (MIMO) equalization at block 1233, e.g., to compensate polarization rotation and/or polarization mode dispersion, carrier frequency offset (CFO) compensation and carrier phase recovery at block 1234, and symbol detection and decoding at block 1236.

The examples described above are not intended to be limiting, and many variations will become apparent to a skilled reader having the benefit of the present disclosure. For example, although the operation of some of the example embodiments described above are described with reference to in-phase (I) and quadrature (Q) components of the data-modulated optical signal, which are generally considered to have a +/- 90 degrees relative phase shift, in some embodiments the two different phase components of the received data-modulated optical signal may have a relative phase shift that differs somewhat from 90 degrees, e.g. by +/- 5 degrees, or by +/- 10% in some embodiments. Furthermore, various features described above with reference to a specific embodiment or embodiments may be combined with other embodiments.

Furthermore in the description above, for purposes of explanation and not limitation, specific details are set forth such as particular architectures, interfaces, techniques, etc. in order to provide a thorough understanding of the present invention. In some instances, detailed descriptions of well-known devices, circuits, and methods are omitted so as not to obscure the description of the present invention with unnecessary detail. Thus, for example, it will be appreciated by those skilled in the art that block diagrams herein can represent conceptual views of illustrative circuitry embodying the principles of the technology. All statements herein reciting principles, aspects, and embodiments of the invention, as well as specific examples thereof, are intended to encompass both structural and functional equivalents thereof. Additionally, it is intended that such equivalents include both currently known equivalents as well as equivalents developed in the future, i.e., any elements developed that perform the same function, regardless of structure.

Thus, while the present invention has been particularly shown and described with reference to example embodiments as illustrated in the drawing, it will be understood by one skilled in the art that various changes in detail may be affected therein without departing from the spirit and scope of the invention as defined by the claims.

**Claims**

1.    An apparatus comprising:

a coherent optical receiver comprising at least one optical mixer, two single-ended photodetection circuits, two analog-to-digital converters, a digital signal processor (DSP), and an optical local oscillator (OLO); and
wherein the at least one optical mixer is configured to receive an OLO signal from the OLO and a data-modulated optical signal and to generate first and second light mixtures by interfering parts of said data-modulated optical signal and said OLO signal with corresponding first and second relative phases;
wherein each single-ended photodetection circuit is connected to generate a single-ended electrical measure of a corresponding one of the light mixtures responsive to receipt thereof and to output an electrical signal formed by removing a DC component of said electrical measure;
wherein each analog-to-digital converter is configured to convert a corresponding one of the output electrical signals into a digital signal; and
wherein the DSP is configured to determine values indicative of a time-averaged power of the data-modulated optical signal and of the OLO signal from the digital signals.

2.    The apparatus of claim 1 wherein the DSP is configured to recover data streams carried by two different phase components of the data-modulated optical signal.

3. The apparatus of claim 2 wherein the DSP is configured to use an iterative phase recovery algorithm to estimate DC shifted versions of the two different phase components of the data-modulated optical signal.

4. The apparatus of claim 2 or 3, wherein the DSP is configured to estimate the values based on an approximation of a distribution of a sum of squares of the two different phase components of the data-modulated optical signal by a chi-squared distribution.

5. The apparatus of claim 2, 3, or 4, wherein the DSP is configured to estimate the values based on an approximation that a time-average of a square of a sum of powers of the two different phase components of the data-modulated optical signal over a square of a time-averaged power of said data-modulated optical signal is about 2.

6. The apparatus of any one of claims 1 to 5 wherein the at least one optical mixer comprises a 90° optical hybrid.

7. The apparatus of any one of claims 1 to 6 wherein each single-ended photodetection circuit includes a photodiode connected in a single-ended configuration to produce an output signal measuring an intensity of light received thereby.

8. The apparatus of any one of claims 1 to 7 comprising a variable optical attenuator (VOA) connected to adjust an optical power of one of the data-modulated optical signal and the OLO signal; and
wherein the coherent optical receiver is configured to operate the VOA based on feedback from the DSP.

9. The apparatus of any one of claim 2 to 8 wherein the two different phase components have a relative phase of about 90 degrees.

10. The apparatus of any one of claims 1 to 9 comprising a polarization beam splitter (PBS) connected to transmit one polarization component of a received data-carrying optical signal to a first opto-electric converter and to direct a second polarization component of the received data-carrying optical signal to a second opto-electric converter; and

 wherein the first opto-electric convertor includes the at least one optical mixer, the two single-ended photodetection circuits, and the two analog-to-digital converters; and
 wherein the second opto-electric convertor includes another optical mixer, two other single-ended photodetection circuits connected to outputs of the another optical mixer, and two other analog-to-digital converters connected to outputs of the other single-ended photodetection circuits.

11. The apparatus of any one of the claims 1 to 10, wherein the coherent optical receiver is configured to adjust a ratio of an optical power of the data-modulated optical signal over an optical power the OLO signal based on the determined values.

12. A method comprising:

 mixing a data-modulated optical signal and an optical local-oscillator (OLO) signal to generate first and second light mixtures by interfering parts of said data-modulated optical signal and said OLO signal with corresponding first and second relative phases;
 for each one of the light mixtures, forming digital measurements by digitizing an electrical signal, the electrical signal being produced by a photodetection circuit connected for single-ended detection producing an electrical measurement of the one of the light mixtures and removing a DC component of the electrical measurement to generate the electrical signal; and
 digitally processing the digital measurements to determine values indicative of a time-averaged power of the data-modulated optical signal and a time-averaged power of the OLO signal.

13. The method of claim 12, comprising using an iterative phase recovery algorithm to estimate DC shifted versions of two different phase components of the data-modulated optical signal.

14. The method of claim 12, comprising estimating the values based on an approximation of a distribution of a sum of squares of the two different phase components of the data-modulated optical signal by a chi-squared distribution.

15. The method of claim 12, 13, or 14, wherein the two different phase components have a relative phase of about 90 degrees.

FIG. 1

EP 4 191 900 A1

<u>200</u>

Obtaining two digital signals
providing streams of AC SEPD
signal samples $R_1$, $R_2$  — 210

Estimating average energy $G_1$ of a
differential AC SEPD signal
$G_1 = \langle (R_1 - R_2)^2 \rangle$

Estimating total average energy
$G_2$ of the AC SEPD signals
$G_2 = \langle R_1^2 \rangle + \langle R_2^2 \rangle$

215

220

Generating a stream of difference
values $\Delta G = (G_2 - G_1)$  — 225

Compute average signal power $P_x$
and the LO power $A_x$ based on the
difference $\Delta G$  — 230

FIG. 2

FIG. 3

FIG. 4

FIG. 5

FIG. 6

<u>700A</u>

FIG. 7A

<u>700B</u>

FIG. 7B

800

$R_1$   $R_2$

131   132

821

| Average power estimation | 141 $P_x$ | | I and Q estimation | $I_x$ |
| 810 | 142 $A_x^2$ | | 820 | $Q_x$ |

813

822

FIG. 8A

800

$R_1$   $R_2$

131   132

830

821

| Average power estimation | 141 $P_x$ | | I and Q estimation | $I_x$ | Equal. & recovery | Symbol detection and decoding |
| 810 | 142 $A_x^2$ | | 820 | $Q_x$ | 834 | 836 |

813

822

FIG. 8B

**FIG. 9**

**FIG. 10**

EP 4 191 900 A1

FIG. 11

FIG. 12

Europäisches
Patentamt

European
Patent Office

Office européen
des brevets

**EUROPEAN SEARCH REPORT**

Application Number

EP 21 21 2517

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | US 10 833 769 B1 (LE THAI SON [US]) 10 November 2020 (2020-11-10) * column 3, line 36 – column 5, line 16; figures 1,2 * * column 5, line 18 – column 7, line 47 * * column 1, lines 56-61 * * column 10, line 60 – column 11, line 5 * ----- | 1-15 | INV. H04B10/61 |
| Y | US 2013/071124 A1 (XIE CHONGJIN [US] ET AL) 21 March 2013 (2013-03-21) * paragraphs [0037] – [0041]; figure 1 * ----- | 1-15 | |
| A | EP 2 237 454 A1 (FUJITSU LTD [JP]) 6 October 2010 (2010-10-06) * paragraphs [0034] – [0036]; figure 3 * ----- | 1-15 | |

TECHNICAL FIELDS
SEARCHED (IPC)

H04B

The present search report has been drawn up for all claims

| Place of search | Date of completion of the search | Examiner |
|---|---|---|
| Munich | 19 May 2022 | De Vries, Jane |

EPO FORM 1503 03.82 (P04C01)

## ANNEX TO THE EUROPEAN SEARCH REPORT
## ON EUROPEAN PATENT APPLICATION NO.

EP 21 21 2517

This annex lists the patent family members relating to the patent documents cited in the above-mentioned European search report.
The members are as contained in the European Patent Office EDP file on
The European Patent Office is in no way liable for these particulars which are merely given for the purpose of information.

19-05-2022

| Patent document cited in search report | | Publication date | Patent family member(s) | | Publication date |
|---|---|---|---|---|---|
| US 10833769 | B1 | 10-11-2020 | NONE | | |
| US 2013071124 | A1 | 21-03-2013 | NONE | | |
| EP 2237454 | A1 | 06-10-2010 | CN | 101860400 A | 13-10-2010 |
| | | | EP | 2237454 A1 | 06-10-2010 |
| | | | JP | 5365315 B2 | 11-12-2013 |
| | | | JP | 2010245772 A | 28-10-2010 |
| | | | US | 2010254718 A1 | 07-10-2010 |

EPO FORM P0459

For more details about this annex : see Official Journal of the European Patent Office, No. 12/82

**EP 4 191 900 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Non-patent literature cited in the description

- **S. T. LE ; V. AREF.** *Single-ended Coherent Receiver*

- **J. CHO.** Single-ended Coherent Receiver. *Journal of Lightwave Technology, https://arxiv.org/ftp/arxiv/papers/2109/2109.09683.pdf*